# EUROPEAN PATENT APPLICATION

(11) **EP 3 323 671 A1**
(43) Date of publication of application: **23.05.2018**
(21) Application number: 16203752.7
(22) Date of filing: 13.12.2016
(51) Int. Cl.: B60N 2/42, B60N 2/427, B60R 21/0134

(54) **METHOD OF REDUCING THE VALUES OF DECCELERATIONS ACTING ON MOTOR VEHICLE OCCUPANT'S BODY DURING AN ACCIDENT AND SAFETY AUTOMOTIVE SEAT WHERE THIS METHOD IS USED**

(30) Priority: 18.11.2016 PL 41951516
(71) Applicant: Przemyslowy Instytut Motoryzacji, 03-301 Warszawa (PL)
(72) Inventor: Muszynski, Andrzej, 05-850 Szeligi (PL)
(74) Representative: Sielewiesiuk, Jakub

(57) **Abstract**

The invention is related to a method of reducing the maximum values of the decelerations that act on motor vehicle occupant's body during a road accident having the nature of a frontal collision and to a safety automotive seat where this method is used. According to the said method, the safety automotive seat with a device for pretensioning (6) an integrated seatbelt (4) restraining the motor vehicle occupant, has an additional seat displacement mechanism (8) that, immediately before the instant of a collision, rapidly moves the seat together with its backrest and with the seat occupant fastened to the seat with a seatbelt towards the vehicle's back and then, immediately after the instant of impact, the seat is returned to its original position, with the return movement being controlled by special energy-absorbing elements (10) provided in the system. In the last phase of the system operation, the seatbelt straps are slackened.

## Description

The invention is related to a method of reducing the maximum values of the decelerations that act on motor vehicle occupant's body during a road accident having the nature of a frontal collision and to a safe automotive seat where this method is used. The method and the safe automotive seat are intended in particular for the vehicle driver or the passenger travelling in the vehicle alongside the driver; however, they may also be applicable for occupants of the other rows of vehicle seats.

The known solutions include intelligent safety systems such as the Autonomous Emergency Braking (AEB) system, which is chiefly used to slow down the vehicle and, as far as possible, to lessen the severity of effects of an unavoidable collision. The AEB can be actuated by the driver or without driver's intervention. The principle of operation of such a system is based on data obtained from a radar sensor and a video camera, which provide a complete picture of the conditions prevailing on the road. Having detected a possibility of an imminent collision, the system sends a signal to the braking system in order to generate a braking force. When driver's reaction is insufficient or there is no driver's reaction at all, the system generates the maximum pressure in the braking system to stop the vehicle.

Another known solution is the Active Control Retractor (ACR), which makes it possible to retract and pretension the vehicle seatbelts. The system can be actuated by a signal received from an active safety system, e.g. AEB, in result of which the seatbelts are tensioned before start of the emergency braking, i.e. before the possible collision.

A device known from Polish patent application No. P.407316 is a spring-based energy absorber, which comprises an energy-absorbing element in the form of a helical spring, coiled on a cylindrical spindle. One of the ends of the spring-shaped element is free and the other one and the spindle are fastened to the system components that can move in relation to each other. When the said movement takes place, the wire of which the spring-shaped element is made is unwound and straightened in plastic deformation conditions, in result of which the kinetic energy is absorbed and dissipated.

The method according to the invention, aimed at reducing the maximum values of the decelerations that act on motor vehicle occupant's body during a frontal impact of the motor vehicle provided with an integrated seatbelt pretensioning device and with an intelligent safety system that monitors the vehicle environment and, when having received information about the unavoidability of a frontal impact, actuates the seatbelt pretensioning system, consists in that the pretensioning of the integrated seatbelt is followed by unlocking of an additional seat displacement mechanism and operation of a seat displacement actuator, in result of which the seat including its backrest is moved backwards to a distance defined by the positon of a rear stop and then, at the instant of impact, the seat with its backrest moves towards the vehicle's front under the forces of inertia, with this movement being controlled by an energy absorber, to a distance determined by the position of the front stop and after the impact, the tension in the seatbelt straps is eased by a seatbelt slackening device.

The safe automotive seat according to the invention, restraining the motor vehicle occupant and used in order to reduce the maximum values of the decelerations that act on motor vehicle occupant's body during a frontal collision of the motor vehicle with an obstacle, including a seat cushion together with a seat backrest and provided with integrated seatbelt, seatbelt pretensioning device, and seat base with a seat sliding mechanism is characterized in that the additional seat displacement mechanism cooperating with a seat displacement actuator and an energy absorber is situated between the seat and its base with a seat sliding mechanism or between the seat base with a seat sliding mechanism and the vehicle floor. The additional seat displacement mechanism has a lock preventing uncontrolled seat displacements as well as front and rear displacement stops, determining the distance to which the seat can move.

It is anticipated that the safe automotive seat provided with an integrated seatbelt (with the seatbelt anchorage points having been incorporated in the seat construction) is installed in a vehicle having an intelligent safety system that makes it possible to obtain information about the unavoidability and type of an imminent road traffic collision/crash a short time before the instant of impact, i.e. before the contact between the vehicle and the obstacle. At the instant of receiving information about the unavoidability of a frontal impact of the vehicle, the modules of the safe automotive seat are activated. In consequence, the integrated seatbelt is pretensioned and the safe automotive seat including the seat backrest is moved towards the vehicle's back. At the instant of impact, the additional seat displacement mechanism is released for the seat (including the backrest) to move towards the vehicle's front to the initial position, with the value of the deceleration acting on vehicle occupant's body being simultaneously kept within safe limits. Thus, at the instant of reaching again his/her initial position (i.e. the position of normal riding in the vehicle), the vehicle occupant, thanks to the operation of the mechanisms/modules of the safe automotive seat as described above, will move with a much lower velocity (in comparison with the pre-impact one), with the vehicle velocity being also significantly reduced in result of the impact against the obstacle. This means that the successive phases of slowing down the occupant's body by the operation of the standard occupant restraint system (airbag and seatbelt) will go with a far lower intensity than they would do if the vehicle seat were of the standard type. The final advantageous effect of operation of the safe automotive seat will be a significant reduction of the loads acting on the vehicle occupant's body during a road accident.

For safety reasons, the safe automotive seat is provided with a mechanism preventing accidental actuation of the system during normal vehicle operation and with a mechanism that slackens the integrated seatbelt immediately after the end of the collision phase.

In the present-day engineering design solutions of automotive seats, standard seatbelts anchored to the vehicle body or seatbelts integrated with the seats are employed to slow down the vehicle occupant's body during a frontal collision and they offer a relatively low degree of protection from the threats that might occur during a side impact. Some of the constructions of the vehicle safety systems marketed at present are provided with an integrated seatbelt pretensioning device, but none of the safety systems and automotive seats makes use of the possibility of intentional displacement of the seat and of slowing down of the seat movement by energy-absorbing elements in case of an accident. This means that no automotive seat with an integrated seatbelt pretensioning device, operating similarly to the invention presented, is available in the market.

The objective of the present invention is to improve the automotive seat provided with the integrated seatbelt pretensioning function, especially with regard to widening the range of applications of such a seat as an active component of the modem intelligent vehicle safety system. According to this invention, this objective will be accomplished with the use of a method as specified in claim 1 and a safe automotive seat having the features as specified in claim 2. The advantageous embodiment versions are covered by the dependent claims.

The construction of an automotive seat is provided with a possibility of longitudinal displacement of the seat in order to reduce the maximum decelerations acting on a motor vehicle occupant during a road accident. The role of the integrated seatbelt pretensioning device and the additional seat displacement mechanism is to ensure that the process of controlled slowing down of vehicle occupant's body during a frontal collision is started before the instant of the collision. Thanks to this, the collision process can be made less severe (with lower deceleration values) and thus the risk of severe bodily injuries to vehicle occupant's body can be reduced.

For the operation of the safe automotive seat to be effective, i.e. for the seat to be capable of performing its function satisfactorily, the integrated seatbelt pretensioning device and afterwards the additional seat displacement mechanism/module should be actuated as much ahead of the instant of the vehicle impact against the obstacle as possible. The operation of the integrated seatbelt pretensioning device, i.e. the seatbelt retraction, should begin no later than several ten milliseconds before the instant of the vehicle impact against the obstacle and should end after the next about 10 or 20 milliseconds so that the backward displacement of the seat including the backrest could be commenced and completed before the instant of the collision. The integrated seatbelt pretensioning device and the additional seat displacement mechanism must also ensure the seatbelt pretensioning and fast seat displacement in a situation made additionally more difficult, when the driver assisted by the emergency braking system has already started the vehicle braking process by pressing the brake pedal with a high force. This is a task difficult to cope with and it requires cooperation of the system with a system of sensors and software so that the road situation could be assessed as much ahead as possible and, based on this, reliable information about the unavoidability of a frontal collision could be obtained. The example embodiment of the present invention does not include the sensors and software that are needed to obtain information about the type and unavoidability of an imminent road traffic collision. It is assumed that one of the solutions already available in the vehicles offered in the market will be used, such as e.g. the systems used by the Autonomous Emergency Braking (AEB) systems.

The seatbelt straps used in vehicles and child safety seats must meet the requirements specified in the regulations currently effective (e.g. UN ECE Regulations Nos. 16, 44, and 129) and concerning the strap capability of transmitting tensile forces, strap elongation under load, and endurance, including abrasion resistance. The seat belt strap when loaded with a specific tensile force undergoes a corresponding elongation. The absolute elongation of a seat belt strap is directly proportional to the length of the strap being tensioned. This means that for a prescribed identical force to develop in two belt strap specimens of different length, the specimen being e.g. a half as long as the other one will have to be extended to an absolute elongation being only a half as high as that of the other one. Therefore, the belt straps subject to loading by a pretensioner should be as short as possible, for the displacement of the working pretensioner elements to be relatively small and, in consequence, for the belt pretensioning time to be within the acceptable limits. The straps of the seatbelts integrated with the seats as used in the embodiment of the present invention may be favourably shorter than the straps of the seatbelts anchored to the vehicle body.

The vehicle occupant who fortunately has survived an accident still remains fastened to the seat with the seatbelt, until the arrival of help, while the seatbelt may remain tightened with a significant force due to the operation of the integrated seatbelt pretensioning device and this force may prevent the buckle from being released. If the occupant is left in such a situation, this may be dangerous for his/her health. Therefore, a correctly functioning and safe automotive seat with a seatbelt pretensioner must ensure the seatbelt to be released immediately after an accident. In the safe automotive seat, a device slackening the seatbelt after the collision phase has been provided.

In the safe automotive seat, a spring-based energy absorber (an invention covered by Polish patent application No. P.407316) is used as an energy-absorbing element, a characteristic feature of which, in comparison with other solutions used for the dissipation of kinetic energy, is a very steep growth in the absorber resistance force after the absorber is activated and then keeping this force on a constant level for the whole absorber operation time. Additional good points of the spring-based energy absorber are its simplicity and compact design, resistance to weather and operation conditions, easy selection of the values of the parameters that determine the value of the resistance force generated by the absorber, and low manufacturing cost. The primary objective of using the spring-based energy absorber as the basic energy-absorbing element in the construction of the additional seat displacement mechanism is to ensure the controllability of the value of the deceleration acting on vehicle occupant's body during a frontal collision.

The object of the invention has been presented, in the diagrammatic form of an embodiment example, with reference to the accompanying drawings, where:
Fig. 1 shows a general view and location of components of the safe automotive seat immediately before the instant of a collision, when the integrated seatbelt pretensioning device has completed the process of tensioning the seatbelt straps;
Fig. 2 shows a general view and location of components of the safe automotive seat still before the instant of a collision, when the additional seat displacement mechanism moved the seat (together with the backrest and the seat occupant) to a certain distance towards the vehicle's back;
Fig. 3 shows a general view and location of components of the safe automotive seat during a collision, when the displacement of the seat (including the backrest) towards the vehicle's front is completed (i.e. the seat including its backrest has returned to the initial position shown in Fig. 1);

The reference numerals used in the drawings have the meaning as follows: 1 - seat base with a seat sliding mechanism; 2 - seat cushion; 3 - seat backrest; 4 - seatbelt strap; 5 - seatbelt anchorage points; 6 - integrated seatbelt pretensioning device; 7 - seatbelt slackening device; 8 - additional seat displacement mechanism; 9 - seat displacement actuator; 10 - energy absorber.

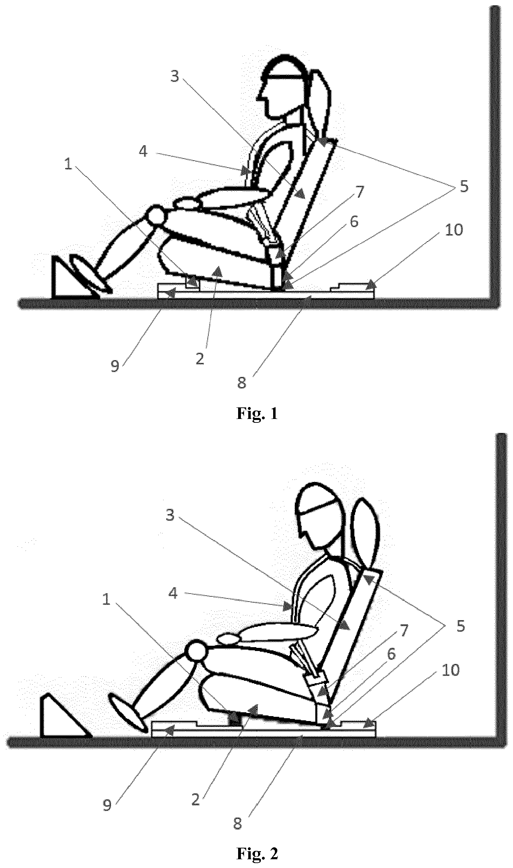

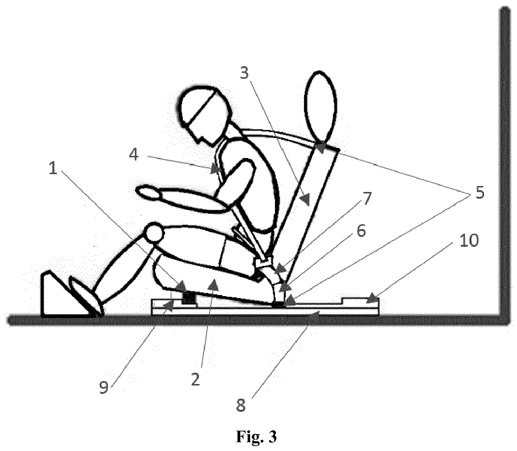

The safe automotive seat to which the invention is related is intended for both the driver and passenger of a motor vehicle and includes the following major components, mechanisms, and devices cooperating with each other: integrated seatbelt pretensioning device 6, additional seat displacement mechanism 8, seat displacement actuator 9, energy absorber 10, and seatbelt slackening device 7. At the instant of receiving information about the unavoidability of a frontal impact of the vehicle, before the impact actually occurs, integrated seatbelt pretensioning device 6 is actuated and after the pretensioning of integrated seatbelt straps 4 is completed (Fig. 1), seat displacement actuator 9 is activated and moves seat cushion 2 together with seat backrest 3 and the seat occupant towards the vehicle's back, by means of additional seat displacement mechanism 8, to a distance of several ten centimetres (Fig. 2), with integrated seatbelt straps 4 being kept tight. At the instant of impact, seat cushion 2 together with seat backrest 3 and the seat occupant moves towards the vehicle's front to the initial position (i.e. the position of normal riding in the vehicle) under the forces of inertia, with this movement being controlled by energy absorber 10 (Fig. 3). Following the completion of the phase of displacement of the safe automotive seat, the phase of slowing down the occupant's body by the seatbelt and other components of the standard occupant restraint system, i.e. airbag, begins. After the vehicle and the vehicle occupant's body come to a standstill, i.e. after the collision phase is finished, the tension in the integrated seatbelt straps 4 is eased by the seatbelt slackening device 7. Further keeping of the straps under strong tension without special safety reasons might involve discomfort or even additional hazard to the vehicle occupant.

## Claims

1. A method of reducing the maximum values of the decelerations that act on motor vehicle occupant's body during a frontal impact of the motor vehicle provided with an integrated seatbelt pretensioning device (6) and with an intelligent safety system that monitors the vehicle environment and, when having received information about the unavoidability of a frontal impact, actuates the integrated seatbelt pretensioning device (6), **characterized in that** the pretensioning of the seatbelt straps (4) is followed by the unlocking of an additional seat displacement mechanism (8) and the operation of a seat displacement actuator (9), in result of which the seat cushion (2) together with the seat backrest (3) is moved backwards to a distance defined by the positon of a rear stop and then, at the instant of impact, the seat cushion (2) with the seat backrest (3) moves towards the vehicle's front under the forces of inertia, with this movement being controlled by an energy absorber (10), to a distance determined by the position of the front stop and after the impact, the tension in the seatbelt straps (4) is eased by a seatbelt slackening device (7).

2. A safe automotive seat restraining the motor vehicle occupant and used in order to reduce the maximum values of the decelerations that act on motor vehicle occupant's body during a frontal collision of the motor vehicle with an obstacle, including a seat cushion (2) together with a seat backrest (3) and provided with integrated seatbelt, seatbelt pretensioning device (6), and seat base with a seat sliding mechanism (1), **characterized in that** it has an additional seat displacement mechanism (8) cooperating with a seat displacement actuator (9) and an energy absorber (10).

3. A safe automotive seat according to claim 2, **characterized in that** the additional seat displacement mechanism (8) is situated between the seat cushion (2) and its base with a seat sliding mechanism (1).

4. A safe automotive seat according to claim 2, **characterized in that** the additional seat displacement mechanism (8) is situated between the seat base with a seat sliding mechanism (1) and the vehicle floor.

5. A safe automotive seat according to claim 2, 3, or 4, **characterized in that** the additional seat displacement mechanism (8) has a lock preventing uncontrolled seat displacements.

6. A safe automotive seat according to claim 2, 3, 4, or 5, **characterized in that** the additional seat displacement mechanism (8) has front and rear displacement stops, determining the distance to which the seat can move.
